(19) Europäisches Patentamt
European Patent Office
Office européen des brevets

(11) EP 3 670 597 B1

(12) **EUROPEAN PATENT SPECIFICATION**

(45) Date of publication and mention of the grant of the patent:
**29.11.2023 Bulletin 2023/48**

(21) Application number: **18215058.1**

(22) Date of filing: **21.12.2018**

(51) International Patent Classification (IPC):
***C08K 7/02*** *(2006.01)* ***C08K 5/42*** *(2006.01)*

(52) Cooperative Patent Classification (CPC):
(C-Sets available)
**C08K 7/02; C08K 5/42** (Cont.)

(54) **FIBER REINFORCED POLYCARBONATE AND COPOLYCARBONATE COMPOSITIONS WITH IMPROVED COLOR STABILITY**

FASERVERSTÄRKTE POLYCARBONAT- UND COPOLYCARBONATZUSAMMENSETZUNGEN MIT VERBESSERTER FARBSTABILITÄT

COMPOSITIONS DE POLYCARBONATE ET DE COPOLYCARBONATE RENFORCÉES DE FIBRES PRÉSENTANT UNE MEILLEURE STABILITÉ DE COULEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020 Bulletin 2020/26**

(73) Proprietor: **SHPP Global Technologies B.V.**
**4612 PX Bergen op Zoom (NL)**

(72) Inventors:
- **Micciche, Fabrizio**
**4612 PX Bergen op Zoom (NL)**
- **Günbas, Duygu Deniz**
**4612 PX Bergen op Zoom (NL)**
- **van de Grampel, Robert Dirk**
**4612 PX Bergen op Zoom (NL)**
- **van der Mee, Mark Adrianus Johannes**
**4612 PX Bergen op Zoom (NL)**
- **Goossens, Johannes Martinus Dina**
**4612 PX Bergen op Zoom (NL)**

(74) Representative: **Modiano, Micaela Nadia**
**Modiano & Partners**
**Thierschstrasse 11**
**80538 München (DE)**

(56) References cited:
**WO-A1-2013/076636 US-B2- 7 462 662**

EP 3 670 597 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/42, C08L 69/00;**
**C08K 7/02, C08L 69/00**

## Description

### BACKGROUND

This disclosure relates to glass filled polycarbonate and polycarbonate copolymer compositions having improved color stability, as well as articles of manufacture that include the compositions.

WO2013076636 discloses a flame retardant thermoplastic composition with high flame retardance at low thicknesses, good flow properties, good impact strength, and good flexural modulus. The polymer composition includes a polycarbonate polymer, a flame retardant additive, talc, glass fibers, and an acid stabilizer in synergistic amounts.

US7462662 discloses that improved fire-retarded properties can be imparted to fiber reinforced polycarbonate resin composition by incorporating into the polycarbonate an effective flame-retardant amount of a combination of perfluoroalkane sulfonate and talc.

Polycarbonates and polycarbonate copolymers including colorants are prone to discoloration from exposure to elevated temperatures during molding and extrusion processes. Countering discoloration using heat stabilizers can increase the melt viscosity during heat aging, which can be detrimental to abusive processing and affect the end performance of the material.

Accordingly, there remains a need in the art for polycarbonate and polycarbonate copolymer compositions that have improved color stability, particularly under abusive molding conditions.

### BRIEF DESCRIPTION

According to its first embodiment as set out in claim 1, the present invention provides a thermoplastic composition which comprises: 40 to 94 weight percent (wt%), preferably 60 to 92 wt%, more preferably 75 to 91 wt% of a polycarbonate, a polycarbonate copolymer, or a combination thereof; 5 to 20 wt%, preferably 5 to 15 wt%, more preferably 8 to 12 wt% of a fiber reinforcement; optionally 1 to 20 parts per million by weight (ppm), preferably 1 to 10 ppm, more preferably 3 to 5 ppm by weight of a phosphorous-containing acid stabilizer; 0.01 to 2 wt%, preferably 0.02 to 1 wt%, more preferably 0.03 to 0.5 wt% of a first colorant consisting of a dye, pigment, or a combination thereof, wherein the first colorant does not comprise titanium dioxide; 0.05 to 0.5 wt%, preferably 0.1 to 0.4 wt%, more preferably 0.1 to 0.3 wt% of an anti-drip agent selected from polytetrafluoroethylene, polytetrafluoroethylene encapsulated in styrene acrylonitrile copolymer, polyphenylene ether, or a combination thereof; and 0.3 to 0.9 wt%, preferably 0.4 to 0.8 wt%, more preferably 0.4 to 0.6 wt% of potassium perfluorobutane sulfonate, wherein the composition does not comprise talc, and wherein all weight percent values are based on the total weight of the composition, and wherein the total weight percent is 100 wt%, and wherein an injection molded sample of the composition subjected to molding conditions comprising a residence time of 600 seconds at 340°C has a $\Delta E$ value of less than or equal to 3.5, preferably less than or equal to 3, more preferably less than or equal to 2.8, according to the CIE1976 L*a*b* color measurement system as specified by ISO 11664-4:2008(E)/CIE S 014-4/E:2007, as measured at a thickness of 2.5 mm according to ASTM D2244 (2011). Particularly preferred embodiments are set out in claims 2-12.

According to its second embodiment, as set out in claim 13, the instant invention provides the use of the thermoplastic composition of the first embodiment of the invention as a film, a sheet, a layer of a multilayer film, or a layer of a multilayer sheet.

The above described and other features are exemplified by the following detailed description.

### DETAILED DESCRIPTION

The Applicants have discovered that increased amounts of potassium perfluorobutane sulfonate (Rimar salt) can be used to provide polycarbonate compositions with improved color stability under abusive molding conditions. In addition, the polycarbonate compositions including the increased amounts of Rimar salt can accommodate colorants such as pigments and dyes without loss of melt flow properties. In comparison, flame retardant additives such as potassium diphenylsulfone sulfonate (KSS), sodium toluene sulfonate (NaTS), or the like do not provide this effect.

Provided herein is a thermoplastic composition including 40 to 94 wt%, preferably 60 to 92 wt%, more preferably 75 to 91 wt% of a polycarbonate, a polycarbonate copolymer, or a combination thereof; 5 to 20 wt%, preferably 5 to 15 wt%, more preferably 8 to 12 wt% of a fiber reinforcement; optionally 1 to 20 ppm, preferably 1 to 10 ppm, more preferably 3 to 5 ppm by weight of a phosphorous-containing acid stabilizer; 0.01 to 5 wt%, preferably 0.01 to 3 wt%, more preferably 0.02 to 2 wt% of a first colorant consisting of a dye, pigment, or a combination thereof, wherein the first colorant does not comprise titanium dioxide; 0.05 to 0.5 wt%, preferably 0.1 to 0.4 wt%, more preferably 0.1 to 0.3 wt% of an anti-drip agent agent selected from polytetrafluoroethylene, polytetrafluoroethylene encapsulated in styrene acrylonitrile copolymer, polyphenylene ether, or a combination thereof, and 0.3 to 0.9 wt%, preferably 0.4 to 0.8 wt%, more preferably 0.4 to 0.6 wt% of potassium perfluorobutane sulfonate, wherein the composition does not comprise talc, wherein all weight

percent values are based on the total weight of the composition. The total weight of the composition totals 100 wt% and wherein an injection molded sample of the composition subjected to molding conditions comprising a residence time of 600 seconds at 340°C has a $\Delta E$ value of less than or equal to 3.5, preferably less than or equal to 3, more preferably less than or equal to 2.8, according to the CIE1976 L*a*b* color measurement system as specified by ISO 11664-4:2008(E)/CIE S 014-4/E:2007, as measured at a thickness of 2.5 mm according to ASTM D2244 (2011)..

"Polycarbonate" and "polycarbonate copolymer" as used herein means a homopolymer or copolymer having repeating structural carbonate units of formula (1)

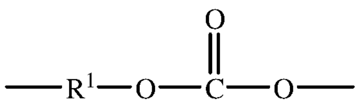
(1)

wherein at least 60 percent of the total number of $R^1$ groups are aromatic, or each $R^1$ contains at least one $C_{6-30}$ aromatic group. Polycarbonates include homopolycarbonates (wherein each $R^1$ in the polymer is the same). Polycarbonate copolymers include copolycarbonates having different $R^1$ moieties in the carbonate units, copolymers comprising carbonate units and other types of polymer units (e.g., ester or siloxane units), or a combination thereof. Specifically, each $R^1$ can be derived from a dihydroxy compound such as an aromatic dihydroxy compound of formula (2) or a bisphenol of formula (3).

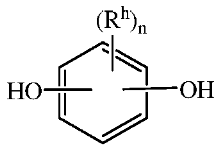
(2)

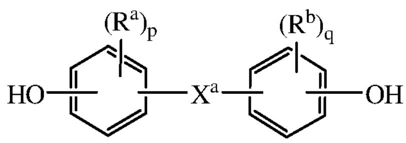
(3)

In formula (2), each $R^h$ is independently a halogen atom, for example bromine, a $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4.

In formula (3), $R^a$ and $R^b$ are each independently a halogen, $C_{1-12}$ alkoxy, or $C_{1-12}$ alkyl, and p and q are each independently integers of 0 to 4, such that when p or q is less than 4, the valence of each carbon of the ring is filled by hydrogen. For example, p and q each can be 0, or p and q each can be 1, and $R^a$ and $R^b$ each can be a $C_{1-3}$ alkyl group, specifically methyl, disposed meta to the hydroxy group on each arylene group. $X^a$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group, for example, a single bond, -O-, -S-, -S(O)-, $-S(O)_2-$, -C(O)-, or a $C_{1-18}$ organic group, which can be cyclic or acyclic, aromatic or non-aromatic, and can further comprise heteroatoms such as halogens, oxygen, nitrogen, sulfur, silicon, or phosphorous. For example, $X^a$ can be a substituted or unsubstituted $C_{3-18}$ cycloalkylidene; a $C_{1-25}$ alkylidene of the formula $-C(R^c)(R^d)-$ wherein $R^c$ and $R^d$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl; or a group of the formula $-C(=R^e)-$ wherein $R^e$ is a divalent $C_{1-12}$ hydrocarbon group.

Some illustrative examples of dihydroxy compounds that can be used are described, for example, in WO 2013/175448 A1, US 2014/0295363, and WO 2014/072923. Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol). Combinations comprising at least one of the foregoing dihydroxy compounds can also be used.

The polycarbonate copolymer can include carbonate units and ester units ("poly(ester-carbonate)s", also known as polyester-polycarbonates). Poly(ester-carbonate)s further contain, in addition to recurring carbonate chain units of formula (1), repeating ester units of formula (4)

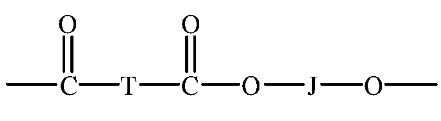
(4)

wherein J is a divalent group derived from a dihydroxy compound (which includes a reactive derivative thereof), and can be, for example, a $C_{1-10}$ alkylene, a $C_{6-20}$ cycloalkylene, a $C_{5-20}$ arylene, or a polyoxyalkylene group in which the alkylene

groups contain 2 to 6 carbon atoms, specifically, 2, 3, or 4 carbon atoms; and T is a divalent group derived from a dicarboxylic acid (which includes a reactive derivative thereof), and can be, for example, a $C_{1-20}$ alkylene, a $C_{5-20}$ cycloalkylene, or a $C_{6-20}$ arylene. Copolyesters containing a combination of different T or J groups can be used. The polyester units can be branched or linear.

Specific dihydroxy compounds include aromatic dihydroxy compounds of formula (2) (e.g., resorcinol), bisphenols of formula (3) (e.g., bisphenol A), a $C_{1-8}$ aliphatic diol such as ethane diol, n-propane diol, i-propane diol, 1,4-butane diol, 1,4-cyclohexane diol, 1,4-hydroxymethylcyclohexane, or a combination thereof. Aliphatic dicarboxylic acids that can be used include $C_{5-20}$ aliphatic dicarboxylic acids (which includes the terminal carboxyl groups), specifically linear $C_{8-12}$ aliphatic dicarboxylic acid such as decanedioic acid (sebacic acid); and alpha, omega-$C_{12}$ dicarboxylic acids such as dodecanedioic acid (DDDA). Aromatic dicarboxylic acids that can be used include terephthalic acid, isophthalic acid, naphthalene dicarboxylic acid, 1,4-cyclohexane dicarboxylic acid, or a combination thereof. A combination of isophthalic acid and terephthalic acid wherein the weight ratio of isophthalic acid to terephthalic acid is 91:9 to 2:98 can be used.

Specific ester units include ethylene terephthalate units, n-proplyene terephthalate units, n-butylene terephthalate units, ester units derived from isophthalic acid, terephthalic acid, and resorcinol (ITR ester units), and ester units derived from sebacic acid and bisphenol A. The molar ratio of ester units to carbonate units in the poly(ester-carbonate)s can vary broadly, for example 1:99 to 99:1, specifically, 10:90 to 90:10, more specifically, 25:75 to 75:25, or from 2:98 to 15:85. The molar ratio of ester units to carbonate units in the poly(ester-carbonate)s can vary from 1:99 to 30:70, specifically 2:98 to 25:75, more specifically 3:97 to 20:80, or from 5:95 to 15:85.

The polycarbonate can be a linear homopolymer containing bisphenol A carbonate units (BPA-PC) that is commercially available under the trade name LEXAN™ from SABIC; a branched Bisphenol A homopolycarbonate with 0.1 to 1.0 mol% of 1,1,1-tris(4-hydroxyphenyl)ethane (THPE) branching agent end-capped with phenol or para-cumylphenol (PCP) end-caps that is commercially available under the trade name LEXAN™ from SABIC; or a branched, cyanophenol end-capped bisphenol A homopolycarbonate produced via interfacial polymerization, containing 3 mol% of THPE branching agent, that is commercially available under the trade name LEXAN™ CFR from SABIC.

The polycarbonate copolymer can be a polycarbonate-polysiloxane copolymer. For example, the composition can further comprise a polycarbonate-polysiloxane copolymer in an amount such that the composition contains from 0.5 to 5 wt% of siloxane. The polysiloxane blocks comprise repeating diorganosiloxane units as in formula (5)

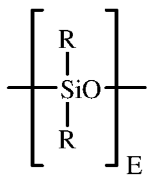
(5)

wherein each R is independently a $C_{1-13}$ monovalent organic group. For example, R can be a $C_{1-13}$ alkyl, $C_{1-13}$ alkoxy, $C_{2-13}$ alkenyl, $C_{2-13}$ alkenyloxy, $C_{3-6}$ cycloalkyl, $C_{3-6}$ cycloalkoxy, $C_{6-14}$ aryl, $C_{6-10}$ aryloxy, $C_{7-13}$ arylalkyl, $C_{7-13}$ aralkoxy, $C_{7-13}$ alkylaryl, or $C_{7-13}$ alkylaryloxy. The foregoing groups can be fully or partially halogenated with fluorine, chlorine, bromine, or iodine, or a combination thereof. Where a transparent poly(carbonate-siloxane) is desired, R can be unsubstituted by halogen. Combinations of the foregoing R groups can be used in the same copolymer.

The value of E in formula (5) can vary widely depending on the type and relative amount of each component in the thermoplastic composition, the desired properties of the composition, and like considerations. Generally, E has an average value of 2 to 1,000, specifically 2 to 500, 2 to 200, or 2 to 125, 5 to 80, or 10 to 70. For example, E can have an average value of 10 to 80 or 10 to 40; or E can have an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

A combination of a first and a second (or more) poly(carbonate-siloxane) copolymers can be used, wherein the average value of E of the first copolymer is less than the average value of E of the second copolymer.

The polysiloxane blocks can be of formula (6)

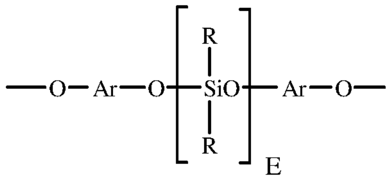

(6)

wherein E is as defined above; each R can be the same or different, and is as defined above; and Ar can be the same or different, and is a substituted or unsubstituted $C_{6-30}$ arylene, wherein the bonds are directly connected to an aromatic moiety. Ar groups in formula (11) can be derived from a $C_{6-30}$ dihydroxyarylene compound, for example a dihydroxyarylene compound of formula (3) or (6) above. dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

The polysiloxane blocks can be of formula (7)

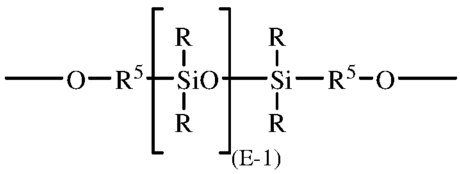

(7)

wherein Rand E are as described above, and each $R^5$ is independently a divalent $C_{1-30}$ organic group, and wherein the polymerized polysiloxane unit is the reaction residue of its corresponding dihydroxy compound. For example, the polysiloxane blocks can be of formula (8):

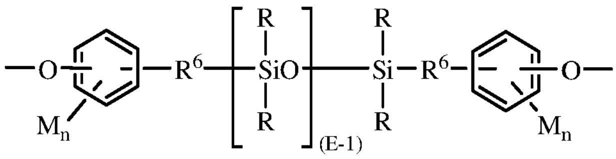

(8)

wherein R and E are as defined above. $R^6$ in formula (8) is a divalent $C_{2-8}$ aliphatic. Each M in formula (14) can be the same or different, and can be a halogen, cyano, nitro, $C_{1-8}$ alkylthio, $C_{1-8}$ alkyl, $C_{1-8}$ alkoxy, $C_{2-8}$ alkenyl, $C_{2-8}$ alkenyloxy, $C_{3-8}$ cycloalkyl, $C_{3-8}$ cycloalkoxy, $C_{6-10}$ aryl, $C_{6-10}$ aryloxy, $C_{7-12}$ aralkyl, $C_{7-12}$ aralkoxy, $C_{7-12}$ alkylaryl, or $C_{7-12}$ alkylaryloxy, wherein each n is independently 0, 1, 2, 3, or 4.

In Formula (8), M can be bromo or chloro, an alkyl such as methyl, ethyl, or propyl, an alkoxy such as methoxy, ethoxy, or propoxy, or an aryl such as phenyl, chlorophenyl, or tolyl; $R^6$ can be a dimethylene, trimethylene or tetramethylene; and R can be a $C_{1-8}$ alkyl, haloalkyl such as trifluoropropyl, cyanoalkyl, or aryl such as phenyl, chlorophenyl or tolyl. For example, R can be methyl, or a combination of methyl and trifluoropropyl, or a combination of methyl and phenyl. For example, R can be methyl, M can be methoxy, n can be 1, and $R^6$ can be a divalent $C_{1-3}$ aliphatic group. Exemplary polysiloxane blocks are of formulas (8a), (8b), or (8c)

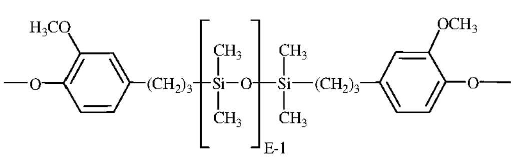

(8a),

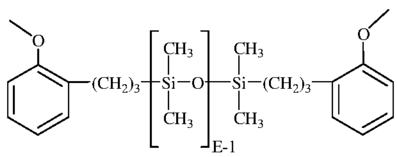

(8b),

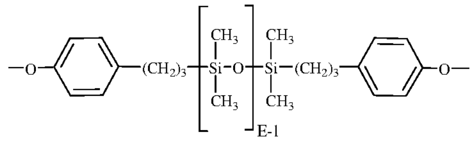

(8c),

or a combination thereof, wherein E has an average value of 2 to 200, 2 to 125, 5 to 125, 5 to 100, 5 to 50, 20 to 80, or 5 to 20.

Blocks of formula (14) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

The poly(carbonate-siloxane) copolymers can comprise 50 to 99 wt% of carbonate units and 1 to 50 wt% siloxane units. Within this range, the polyorganosiloxane-polycarbonate copolymer can comprise 70 to 98 wt%, more specifically 75 to 97 wt% of carbonate units and 2 to 30 wt%, more specifically 3 to 25 wt% siloxane units.

The polycarbonates or polycarbonate copolymers can have a weight average molecular weight ($M_w$) of 10,000 to 200,000 grams per mole (g/mol), specifically 15,000 to 80,000 g/mol, as measured by gel permeation chromatography (GPC) using a crosslinked styrene-divinylbenzene column and calibrated to bisphenol A homopolycarbonate references. For example, the polycarbonate or polycarbonate copolymer can have a weight average molecular weight of 18,000 to 40,000 g/mol.

The composition can include one or more polycarbonates and/or polycarbonate copolymers, which can have the same or different $M_w$. The polycarbonate or polycarbonate copolymer can comprise a high molecular weight polycarbonate or polycarbonate copolymer having a $M_w$ of greater than 25,000 g/mol and a low molecular weight polycarbonate or polycarbonate copolymer having a $M_w$ of less than 25,000 g/mol, as measured by gel permeation chromatography using BPA polycarbonate standards. The weight ratio of high molecular weight polycarbonate or polycarbonate copolymer to low molecular weight polycarbonate or polycarbonate copolymer can be, for example, 5:1 to 1:5, or 3:1 to 1:3, or 2:1 to 1:2, or 1:1. For example, a blend of the high molecular weight polycarbonate and the low molecular weight polycarbonate can have an average molecular weight of 20,000 to 30,000 g/mol for the total composition.

Polycarbonates and polycarbonate copolymers can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and $C_{1-22}$ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 4.0 wt%. Combinations comprising linear polycarbonates and branched polycarbonates can be used.

The thermoplastic composition includes 5 to 20 wt% of a fiber reinforcement based on the total weight of the composition. For example, the composition can include 5 to 15 wt% or preferably 8 to 12 wt% of a fiber reinforcement. The composition can further include a plurality of fibers, wherein the fibers are the same or different.

The fiber reinforcement can be formed of glass fibers, carbon fibers, basalt fibers, or a combination thereof. The fiber reinforcement can comprise or consist of glass fibers. Optionally, the fiber reinforcement can comprise basalt fibers and/or carbon fibers. The fibers can be long fibers (average fiber length of less than or equal to 5 mm) or short fibers (average fiber length greater than 5 mm) that are continuous, chopped, woven, or the like. The fibers can have a length from 0.2 to 20 mm, preferably 0.2 to 10 mm, more preferably 0.7 to 7 mm. The fibers can have various cross-sections, such as a round (or circular), flat, bilobe, or irregular cross-section. The average diameter of the fibers can be from 1 to 25 micrometers ($\mu$m), preferably 3 to 20 $\mu$m, more preferably 4 to 18 $\mu$m, even more preferably 5 to 17 $\mu$m.

Preferably, the fiber reinforcement includes a plurality of chopped glass fibers. The term "glass" refers to a material, natural or synthetic, which contains silicon dioxide ($SiO_2$) or silica as its main material. The glass fibers may be textile glass fibers such as E, A, C, ECR, R, S, D, and/or NE glass fibers, and are desirably E type glass fibers. The

more caustic glasses such a soda lime glass, which can sometimes cause polycarbonate degradation and foaming, can be excluded or glass with low amounts of sodium and calcium can be used.

The fibers can further include a coating agent (i.e., sizing). The coating agent can provide for a coated fiber that is bonding or non-bonding with polycarbonate or polycarbonate copolymers. Bonding fibers have a sizing on the surface of the fibers that is compatible with polycarbonate or polycarbonate copolymers, whereas non-bonding fibers have a sizing on their surface that does not promote strong adhesion to polycarbonate or polycarbonate copolymers. The non-bonding/bonding characteristics of the fibers can be controlled, for example, by coating the fibers with coating agents such as an epoxide, polyvinyl acetate, particular polyester resins, starch, acrylic resins, melamine, polyvinyl chloride, polyethylene oxide, polyurethane, polyepoxide, poly(arylene ether) (e.g., phenoxide), polyvinyl alcohol, or a silane coupling agent, to change the bonding properties between the fibers and the polycarbonate or polycarbonate copolymers in the composition.

Examples of bonding coating agents are epoxide, polyepoxide, poly(vinyl acetate), polyester, starch, poly(acrylic acid), poly(meth)acrylate, melamine, poly(vinyl chloride), poly(alkylene oxide) such as poly($C_{1-3}$ alkylene oxide), poly(arylene ether), polyurethane, poly(vinyl alcohol), $C_{1-6}$ organosilanes, or a combination thereof. For example, the bonding coating agent can be a phenolic epoxy resin, an epoxylated carboxylic acid derivative (e.g., a reaction product of an ester of a polycarboxylic acid having one or more unesterified carboxyl groups with a compound including more than one epoxy group), an epoxidized diene polymer, an epoxidized polyene polymer, or a combination thereof.

Examples of non-bonding coating agents include polyolefins, for example, a polyolefin wax, such as a natural or artificial olefin wax. The polyolefin wax can be polyethylene wax, polypropylene wax, polybutylene wax, or copolymers thereof such as polyethylene-propylene wax and polyethylene-butylene wax. Alpha olefin-ethylene copolymers are also useful as coating waxes. The polyolefin wax may also include a polar co-monomer such as an unsaturated carboxylic acid, carboxylic ester, or carboxylic acid salt. Other suitable polyolefin coating agents include paraffin and higher alkyl (e.g., greater than $C_8$) siloxy and silanol compounds.

The bonding and non-bonding coating agents can further include a coupling agent to improve the adhesion between the coating agent and the fibers. The coupling agent can be a functionalized silane. For example, the functionalized silane can be tri($C_{1-6}$ alkoxy)monoamino silane, tri($C_{1-6}$ alkoxy)diamino silane, tri($C_{1-6}$ alkoxy)($C_{1-6}$ alkyl ureido) silane, tri($C_{1-6}$ alkoxy) (epoxy $C_{1-6}$ alkyl) silane, tri($C_{1-6}$ alkoxy)(glycidoxy $C_{1-6}$ alkyl) silane, tri($C_{1-6}$ alkoxy)(mercapto $C_{1-6}$ alkyl) silane, or a combination thereof. For example, the coupling agent can be (3-aminopropyl)triethoxysilane, (3-glycidoxypropyl)trimethoxysilane, (2-(3,4-epoxycyclohexyl) ethyl)triethoxysilane, (3-mercaptopropyl)trimethoxysilane, (3-(2-aminoethylamino)propyl) triethoxysilane, (3-ureidopropyl)triethoxysilane, or a combination thereof.

Other materials that can be included in the coating agent are anti-static agents, lubricants, wetting agents, or the like.

The amount of coating agent can be from 0.1 to 5 wt% based on the weight of the fibers. The coating agent may be applied to the fibers by suitable means, such as immersing the fibers in the coating agent or contacting the fibers with an aqueous emulsion, or suspension of the coating. Other coating methods include using an aqueous dispersion of the sizing applied to the uncoated fiber by a roller in a continuous fashion, which can be followed by a heat treatment or curing step.

The fibers can be provided in the form of monofilament or multifilament fibers and can be used either alone or in combination with other types of fiber, for example, co-weaving or core/sheath, side-by-side, skin-core type or matrix and fibril constructions, or by other methods including those known to one skilled in the art of fiber manufacture. Suitable co-woven structures include, for example, glass fiber-carbon or the like. Fibers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

The thermoplastic composition further includes 0.3 to 0.9 wt%, preferably 0.4 to 0.8 wt%, more preferably 0.4 to 0.6 wt% of potassium perfluorobutane sulfonate, based on the total weight of the thermoplastic composition. The amount of Rimar salt is an effective amount to provide an injection molded sample of the composition with a $\Delta E$ value of less than or equal to 3.5, preferably less than or equal to 3, more preferably less than or equal to 2.8, according to the CIE1976 L*a*b* color measurement system as specified by ISO 11664-4:2008(E)/CIE S 014-4/E:2007, when the composition is subjected to molding conditions comprising a residence time of 600 seconds at 340°C, as measured at a thickness of 2.5 mm according to ASTM D2244 (2011). It has been found that the polycarbonates compounded with particular amounts (or effective amounts) of Rimar salts can have improved color stability, particularly when subjected to abusive or stringent molding conditions. The term "abusive molding condition" is defined below.

The color change $\Delta E$ can be determined by measuring the CIELAB color space dimensions L*, a*, and b* for an injection molded sample of the composition under standard and abusive molding conditions. The color change ($\Delta E$) is calculated using Equation 1:

$$\Delta E = [(\Delta L^*)^2 + (\Delta a^*)^2 + (\Delta b^*)^2]^{1/2} \qquad \text{Equation 1}$$

In Equation 1, $\Delta L^*$ is the difference in L* under standard conditions and L* under abusive conditions, $\Delta a^*$ is the difference in a* under standard conditions and a* under abusive conditions, and $\Delta b^*$ is the difference in b* under standard conditions and b* under abusive conditions. Further details of the CIELAB and measurements are provided in the Examples.

The standard molding conditions can include a residence time of 300 seconds at a barrel temperature of 310°C. The abusive molding conditions include, for example, a residence time of 300 to 1800 seconds at a barrel temperature of 330 to 350°C. Exemplary abusive molding conditions include a residence time of 300 seconds at 330°C, preferably a residence time of 600 seconds at 340°C, more preferably a residence time of 900 seconds at 340°C. For example, an injection molded sample of the composition subject to molding conditions comprising a residence time of 300 seconds at 330°C has a ΔE value of less than or equal to 2.5, preferably less than or equal to 2.2, more preferably less than or equal to 2. According to the invention, an injection molded sample of the composition subject to molding conditions comprising a residence time of 600 seconds at 340°C has a ΔE value of less than or equal to 3.5, preferably less than or equal to 3, more preferably less than or equal to 2.8, according to the CIE1976 L*a*b* color measurement system as specified by ISO 11664-4:2008(E)/CIE S 014-4/E:2007, as measured at a thickness of 2.5 mm according to ASTM D2244 (2011). For example, an injection molded sample of the composition subject to molding conditions comprising a residence time of 900 seconds at 340°C has a ΔE value of less than or equal to 5, preferably less than or equal to 4.5, more preferably less than or equal to 4. The ΔE value, calculated based on Equation 1, is determined from the same composition subjected to standard molding conditions comprising a residence time of 300 seconds at a barrel temperature of 310°C.

For compositions described herein and including the disclosed amount of potassium perfluorobutane sulfonate, the ΔE value of the injection molded sample of the composition subject to the abusive molding conditions can be at least 20% less than, preferably at least 30% less than, more preferably at least 40% less than, even more preferably at least 50% less than a ΔE value of an injection molded sample of a comparable composition subject to the abusive molding conditions that does not comprise the amount of potassium perfluorobutane sulfonate. The ΔE value is under the same abusive molding conditions in each case. For example, the abusive molding conditions can include a residence time of 300 seconds at 330°C, preferably a residence time of 600 seconds at 340°C, more preferably a residence time of 900 seconds at 340°C. The "comparable composition" is the same composition as described herein, except for the disclosed amount of potassium perfluorobutane sulfonate.

The composition can further include one or more additional sulfonate salts. The additional sulfonate salts can be an alkyl or perfluoroalkyl sulfonate salt. Alkyl and perfluoroalkyl groups on such compounds can have from 1 to 16 carbon atoms. The alkyl and perfluoroalkyl sulfonate salt includes cation(s) to balance the charge of the sulfonate. Cations include sodium, potassium, ammonium, phosphonium, or the like. Specific examples of alkyl sulfonate salts include, but are not limited to, potassium diphenylsulfone sulfonate and sodium toluenesulfonate. Specific examples of perfluoroalkyl sulfonate salts include, but are not limited to, potassium perfluoroctane sulfonate, tetraethylammonium perfluorohexane sulfonate, sodium toluene sulfonate (NaTS), sodium diphenylsulfone sulfonate, and potassium diphenylsulfone sulfonate (KSS). In some aspects, the composition does not include an additional sulfonate salt; in other words, the composition includes potassium perfluorobutane sulfonate and does not contain an additional sulfonate salt.

The thermoplastic composition according to the first embodiment of the invention does not comprise talc.

The thermoplastic composition according to the first embodiment of the invention also includes an anti-drip agent in an amount of 0.05 to 0.5 wt%, preferably 0.1 to 0.4 wt%, more preferably 0.1 to 0.3 wt% based on the total weight of the thermoplastic composition, selected from polytetrafluoroethylene, polytetrafluoroethylene encapsulated in styrene acrylonitrile copolymer, polyphenylene ether, or a combination thereof. The anti-drip agent can be, for example, a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. An exemplary TSAN comprises 50 wt% PTFE and 50 wt% SAN, based on the total weight of the encapsulated fluoropolymer. The SAN can also comprise, for example, 75 wt% styrene and 25 wt% acrylonitrile, based on the total weight of the encapsulated fluoropolymer. For example, the anti-drip agent can be polyphenylene ether.

The thermoplastic composition can be essentially free of chlorine and bromine. Essentially free of chlorine and bromine refers to materials produced without the intentional addition of chlorine or bromine or chlorine or bromine containing materials. It is understood however that in facilities that process multiple products a certain amount of cross contamination can occur resulting in bromine and/or chlorine levels typically on the ppm by weight scale. With this understanding it can be readily appreciated that essentially free of bromine and chlorine can be defined as having a bromine and/or chlorine content of less than or equal to 100 ppm by weight (ppm), less than or equal to 75 ppm, or less than or equal to 50 ppm.

The thermoplastic composition further can include a phosphorous-containing acid stabilizer. The phosphorous-containing acid stabilizer can be used in an amount of 1 to 20 ppm, preferably 1 to 10 ppm, more preferably 3 to 5 ppm,

based on the total weight of the thermoplastic composition. Examples of acid stabilizers include acids, acid salts, esters of acids, or their combinations, such as phosphoric acid, phosphorous acid, hypophosphorous acid, hypophosphoric acid, phosphinic acid, phosphonic acid, metaphosphoric acid, hexametaphosphoric acid, thiophosphoric acid, fluorophosphoric acid, difluorophosphoric acid, fluorophosphorous acid, difluorophosphorous acid, fluorohypophosphorous acid, fluorohypophosphoric acid, or a combination thereof. The acid stabilizer can be phosphorous acid.

The thermoplastic compositions can further include additional acids, acid salts, and esters of acids, such as, for example, sulphuric acid, sulphites, zinc phosphate, mono calcium phosphate, or the like.

The thermoplastic composition can further include an impact modifier. Examples of impact modifiers include natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR), silicone elastomers, styrene-butadiene-styrene (SBS), styrene-butadiene rubber (SBR), styrene-(ethylene-butene)-styrene (SEBS), acrylonitrile-butadiene-styrene (ABS), acrylonitrile-ethylene-propylene-diene-styrene (AES), styreneisoprene-styrene (SIS), styrene-(ethylene-propylene)-styrene (SEPS), methyl methacrylate-butadiene-styrene (MBS), high rubber graft (HRG), or the like.

An additive composition can be used, comprising one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble or non-soluble in polycarbonate or polycarbonate copolymers. The additive composition can include an impact modifier, flow modifier, filler (e.g., glass, carbon, mineral, or metal), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent, or a combination thereof. In general, the additives are used in the amounts known to be effective. For example, the total amount of the additive composition can be 0.001 to 10 wt%, or 0.01 to 5 wt%, based on the total weight of the thermoplastic composition.

Heat stabilizer additives include hindered phenols (e.g., IRGANOX 1010 and IRGANOX 1076), either alone or in combination with organophosphites (e.g. triphenyl phosphite, trimethyl phosphite, tris-(2,6-dimethylphenyl)phosphite, tris-(mixed mono-and dinonylphenyl)phosphite or the like), phosphonates (e.g, dimethylbenzene phosphonate or the like), or combinations thereof. The heat stabilizer can be tris(2,4-di-t-butylphenyl) phosphite available as IRGAPHOS 168. Heat stabilizers can be used in amounts of 0.01 to 2 wt%, based on the total weight of polymer in the composition.

There is considerable overlap among plasticizers, lubricants, and mold release agents, which include, for example, glycerol tristearate (GTS), phthalic acid esters (e.g, octyl-4,5-epoxy-hexahydrophthalate), tris-(octoxycarbonylethyl)isocyanurate, tristearin, di- or polyfunctional aromatic phosphates (e.g, resorcinol tetraphenyl diphosphate (RDP), the bis(diphenyl) phosphate of hydroquinone and the bis(diphenyl) phosphate of bisphenol A); poly-alpha-olefins; epoxidized soybean oil; mineral oils; silicones, including silicone oils (e.g., poly(dimethyl diphenyl siloxanes); esters, for example, fatty acid esters (e.g, alkyl stearyl esters, such as, methyl stearate, stearyl stearate, and the like), waxes (e.g, beeswax, montan wax, paraffin wax, or the like), or a combination thereof. These are generally used in amounts of 0.01 to 15 wt%, based on the total weight of the polymer in the composition.

Reinforcing fillers can include, but are not limited to, glass spheres such as hollow and solid glass spheres, silicate spheres, or the like; kaolin clay, including hard kaolin, soft kaolin, calcined kaolin, kaolin comprising various coatings known in the art to facilitate compatibility with the polymer matrix, or the like; flaked fillers such as glass flakes, glass spheres, flaked silicon carbide, aluminum oxides, or the like; organic fillers such as polytetrafluoroethylene; as well as mica, clay, feldspar, fillite, quartz, quartzite, perlite, tripoli, diatomaceous earth, carbon black, or the like, or a combination thereof. When used as a less isotropic filler, the reinforcing filler can include milled glass, glass flakes, glass or ceramic bubbles, glass spheres, or a combination thereof. The composition can include a combination of the fiber reinforcement and a platy filler such as glass flake, mica, or a combination thereof. Without being bound by theory, combinations of fibers with platy fillers may be beneficial in producing molded articles with greater strength and less warp, and with better flatness and improved dimensional stability over the use of cylindrical fibers.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or a combination thereof. Antioxidants are used in amounts of 0.01 to 0.1 parts by weight, based on 100 parts by weight of the total composition.

The thermoplastic composition can further include flame retardants. Flame retardants that can be used include salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, these inorganic flame retardant salts are present in amounts of 0.01 to 10 wt%, more specifically 0.02 to 1 wt%, based on the total weight of the thermoplastic composition.

The thermoplastic composition according to the first embodiment of the instant invention further includes 0.01 to 2 wt%, preferably 0.02 to 1 wt%, more preferably 0.03 to 0.5 wt% of a first colorant, based on the total weight of the composition, wherein the first colorant does not comprise titanium dioxide ($TiO_2$). The first colorant consists of a dye, pigment, or a combination thereof, and one or more colorants can be used together. For example, the composition can include 0.01 to 2 wt%, preferably 0.02 to 1 wt%, more preferably 0.03 to 0.5 wt% of a first colorant selected from Solvent Green 3, Solvent Green 28, Solvent Green 38, Pigment Green 50, Pigment Green 36, Solvent Red 52, Solvent Red 101, Solvent Red 111, Solvent Red 135, Solvent Red 169, Solvent Red 179, Solvent Red 207, Solvent Red 242, Pigment Red 101, Disperse Red 22, Vat Red 41, Solvent Orange 60, Solvent Orange 63, Disperse Orange 47, Solvent Violet 13, Solvent Violet 14, Solvent Violet 36, Solvent Violet 50, Disperse Violet 26/31, Pigment Blue 29, Pigment Blue 60, Copper Phthalocyanine Pigment Blue 15.4, Disperse Blue 73, Solvent Blue 97, Solvent Blue 101, Solvent Blue 104, Solvent Blue 122, Solvent Blue 138, Pigment Yellow 53, Pigment Yellow 138, Pigment Yellow 139, Disperse Yellow 201, Solvent Yellow 33, Solvent Yellow 114, Solvent Yellow 93, Solvent Yellow 98, Solvent Yellow 163, Solvent Yellow 160:1, Solvent Yellow 188, Pigment Brown 24, Amino Ketone Black, carbon black, channel black, Pigment Black 6, Pigment Black 7, or a combination thereof. In another example, the first colorant can be Pigment Black 7, Solvent Yellow 163, Solvent Red 242, Pigment Red 101, Solvent Violet 36, Solvent Blue 104, or a combination thereof.

The composition can optionally further include 0.01 to 20 wt%, preferably 0.01 to 6 wt%, more preferably 0.01 to 2 wt% of a second colorant that is selected from chromium oxide, zinc sulfide, zinc oxide, titanium dioxide, or a combination thereof, based on the total weight of the composition. For example, the composition can include 0.01 to 2 wt%, preferably 0.02 to 1 wt%, more preferably 0.03 to 0.5 wt% of a first colorant, and 0.01 to 20 wt%, preferably 0.01 to 3 wt%, more preferably 0.01 to 2 wt% of a second colorant that is titanium dioxide, based on the total weight of the composition.

The compositions can be manufactured, for example, by blending powdered polycarbonate or polycarbonate copolymer, and other optional components. The blend is then fed into the throat of an extruder (e.g., a twin-screw extruder) via a hopper. Alternatively, components can be incorporated into the composition by direct feeding into the extruder at the throat or downstream through a sidestuffer, or by compounding into a masterbatch and feeding into the extruder. The extruder is operated at a temperature exceeding the threshold of flow. The extrudate can be quenched, pelletized, and used for subsequent molding, shaping, or forming.

The present disclosure provides also shaped, formed, or molded articles comprising the compositions.These latter articles are not claimed, however. Shaping the molded articles can be done, for example, by injection molding, extrusion, rotational molding, blow molding, and thermoforming. Exemplary articles, according to the present disclosure, include computer and business machine housings, handheld electronic device housings, electrical connectors, and components of lighting fixtures, ornaments, home appliances, roofs, greenhouses, sun rooms, swimming pool enclosures, and the like. The article prepared from the thermoplastic composition can have improved stability during exposure to high temperatures and high relative humidity.

The article according to the present disclosure can be a molded article, a film, a sheet, a layer of a multilayer film, or a layer of a multilayer sheet. Exemplary articles include an automotive exterior component such as a bumper, a grille, a wheel cover, an exterior light, or an auto lens; an automotive interior component, such as a mirror housing, a pillar, an instrument panel, a glove box, a door component, an interior trim component, or engine compartment part; an agricultural tractor or device, or a construction vehicle or device; a component for a marine or personal water craft; an aircraft or train component, such as a seating component, a sidewall part, or a ceiling part; a plumbing component, such as a valve part (e.g., a pump part); a heating or cooling component, such as a furnace part, a heat pump part, or an air conditioner part, a humidifier housing, a thermostat housing, an air conditioner drain pan, an outdoor cabinet, or a component in a plenum space; a personal or business electronic part, such as a router part, a printer part, a computer component, an microelectronic component (e.g., capacitor, diode, or resistor), a projector part, a display part, a photocopier part, a printer toner cartridge enclosure; an enclosure or part of a cell phone, a walkie-talkie, a scanner, a media player, a radio, a GPS system, an eBook, a tablet, a wearable electronic device, a smart watch, a wearable training/tracking device, a wearable activity/sleep monitoring system, a wearable electronic wristband, or electronic glasses; a home appliance component, such as a hair drier part, an iron part, a coffee maker part, a toaster part, a washing machine part, a refrigerator part, a microwave part, an oven part, a smoke detector part, or a power tool part; an electrical component, such as an electric wiring enclosure, a lighting part, a fiber optic part, or a telecom enclosure or infrastructure part; a medical device component, such as a medical or dental instrument part, a medical or dental lighting part, a medical or dental instrument tray, an X-ray equipment part, or a medical scanner enclosure or part; a safety component, such as a fire helmet or part, a safety shield or part, or safety glasses or part; a cooking component, such as a cookware part or a cutlery part; a building component, such as an animal cage or part, a greenhouse or part, or a sun room or

part; an industrial component, such as a hand held tool enclosure or part, or a fan blade or part. These descriptions can be interchangeable and the article can be alternatively described using one or more of the descriptions. For example, the display on a medical device could be described as a medical instrument part or a display part.

According to its second embodiment, the present invention provides also for the use of the thermoplastic composition according to the invention as a film, a sheet, a layer of a multilayer film, or a layer of a multilayer sheet.This disclosure is further illustrated by the following examples, which are non-limiting.

EXAMPLES

The materials used for the examples are provided in Table 1. The amount of materials in the formulations is given in weight percent unless otherwise indicated.

Table 1

| Material | Description | Source |
|---|---|---|
| PC-1 | Linear Bisphenol A polycarbonate end-capped with para-cumyl phenol (PCP), produced via interfacial polymerization, $M_w$ of approximately 21,800 g/mol as determined by GPC using bisphenol A homopolycarbonate standards | SABIC |
| PC-2 | Linear Bisphenol A polycarbonate end-capped with phenol, produced via interfacial polymerization, $M_w$ of approximately 30,500 g/mol as determined by GPC using bisphenol A homopolycarbonate standards | SABIC |
| GF | Chopped E-glass fiber, 14 micrometer diameter, polyolefin amino silane coating, obtained as OCV-415CA | Owens Corning |
| Rimar salt | Potassium perfluorobutane sulfonate | 3M |
| PETS | Pentaerythrityl tetrastearate, >90% esterified | Faci |
| KSS | Potassium diphenylsulfone sulfonate | Sloss Ind. |
| NaTs | Sodium p-toluenesulfonate | Arichem |
| TSAN | Poly(tetrafluoroethylene) encapsulated in styrene-acrylonitrile copolymer (50:50) | SABIC |
| $H_3PO_3$ | Phosphorous acid solution (45 wt% aqueous solution); masterbatch containing 99.38 wt% of PC-1 and 0.62 wt% of the 45 wt% aqueous solution | Quaron |
| Phosphite | Tris(di-t-butyl phenyl)phosphite, CAS Reg. No. 31570-04-4 | Ciba |
| UV | 2-(2'-hydroxy-5'-t-octylphenyl)benzotriazole, CAS Reg. No. 3147-75-9, obtained as CYASORB 5411 | Cytec |
| BUTOS | Butyl tosylate, master-batch containing 0.3 wt% of butyl tosylate in PC-1, CAS Reg. No. 778-28-9 | Sigma-Aldrich |
| $TiO_2$ | Coated titanium dioxide | Kronos |
| Black 7 | Pigment Black 7, CAS Reg. No. 1333-86-4, obtained as MONARCH 800 | CABOT |
| Red 135 | Solvent Red 135, CAS Reg. No. 20749-68-2 | Lanxess |
| Red 242 | Solvent Red 242, CAS Reg. No. 522-75-8, obtained as HOSTASOL RED 5B | Clariant |
| Blue 104 | Solvent Blue 104, 1,4-bis(2,4,6-trimethylanilino)anthracene-9,10-dione, CAS Reg. No. 116-75-6, obtained as SANDOPLAST BLUE 2B | Clariant |
| Violet 36 | Solvent Violet 36, CAS Reg. No. 61951-89-1, obtained as MACROLEX VIOLET 3R | Lanxess |
| Yellow 163 | Solvent Yellow 163, CAS Reg. No. 13676-91-0 | BASF |
| Red 101 | Pigment red 101 (iron (III) oxide), CAS Reg. No. 1309-37-1; obtained as BAYFERROX 180M or BAYFERROX 110M from Lanxess Corp or COLORTHERM Red 180M from Bayer | Lanxess, Bayer |

The extrusion conditions are shown in Table 2. The components were pre-mixed in a paint shaker, and the glass fibers were added after initial mixing to prevent excessive fuzzing. The blends were extruded under a minimal

vacuum (e.g., 0.15 to 0.6 atmospheres (atm) or 15.2 to 60.8 kilopascals (kPa)) on a ZSK-25 millimeter (mm) co-rotating twin screw extruder (Krupp Werner and Pfleiderer, GmbH, Germany) and cut into pellets.

Table 2

| Parameter | Unit | Value |
|---|---|---|
| Feed Temperature | °C | 40 |
| Zone 1 Temperature | °C | 200 |
| Zone 2 Temperature | °C | 250 |
| Zone 3 Temperature | °C | 270 |
| Zones 4-9 Temperatures | °C | 310 |
| Screw Speed | rpm | 300 |
| Throughput | kg/hr | 14 |
| Torque | % | Max. |

Samples were molded as follows. Resultant pellets were dried for 2 hours at 120°C in a forced air-circulating oven. Injection molding using the resultant pellets was performed on an Engel 45, 75, or 85 injection molding machine according to the molding profiles shown in Table 3. Residence time refers to the amount of time (seconds, s) at temperature Z3.

Table 3

| Standard Molding (300 s residence time) | | Abusive Molding 1 (300 s residence time) | | Abusive Molding 2 (600 s residence time) | | Abusive Molding 3 (900 s residence time) | |
|---|---|---|---|---|---|---|---|
| Zone | T (°C) | Zone | T (°C) | Zone | T (°C) | Zone | T (°C) |
| Feed | 40 | Feed | 40 | Feed | 40 | Feed | 40 |
| Z1 | 290 | Z1 | 320 | Z1 | 320 | Z1 | 320 |
| Z2 | 300 | Z2 | 330 | Z2 | 330 | Z2 | 330 |
| Z3 | 310 | Z3 | 330 | Z3 | 340 | Z3 | 340 |
| Mold | 100 | Mold | 100 | Mold | 100 | Mold | 100 |

Molecular weight was determined by gel permeation chromatography (GPC), which was performed by partially dissolving samples in dichloromethane and analyzed using an Agilent model 1260 GPC instrument equipped with a PL MiniMIX-C gel column (length of 250 mm, inner diameter of 4.6 mm, and particle size of 5 μm) and a UV detector. The mobile phase was dichloromethane with a flow rate of 0.3 milliliters per minute (mL/min) and the column temperature was held at 35°C. Agilent ChemStation software with GPC add-on was used for calibration and molar mass calculations. All molecular weights were reported relative to polycarbonate by using a calibration curve based on monodisperse polycarbonate standards.

Melt volume flow rate (MVR) was measured according to ISO 1133 (2011) at 300°C with a 1.2 kg load for 5 minutes. MVR is reported as cubic centimeters per 10 minutes ($cm^3$/10 min).

Colors were measured in the CIELAB color space. As used herein, "CIELAB" refers to the color space standard set forth in the joint standard of ISO and the International Commission on Illumination (CIE): ISO 11664-4:2008(E)/CIE S 014-4/E:2007. This color space uses three dimensions, L*, a*, and b*. L* is the lightness or L-value, a* is a measure of the color between magenta (positive values) and green (negative values), b* is a measure of the color between yellow (positive values) and blue (negative values). L*, a*, and b* values set forth herein are determined using a Gretag Macbeth Color Eye MB700A Spectrophotometer in the range of 360 to 750 nm (with illuminant D65, observer angle of 10°, geometry-specular component included, calibration transmission mode). CIELAB color and color change values were calculated according to ASTM E308 (2008) and ASTM D2244 (2011), respectively. The color space dimensions L*, a*, and b* for an injection molded sample (60 mm x 60 mm x 2.5 mm) of each composition are determined under standard and abusive molding conditions. The color change (ΔE) is determined by the changes in the observed L*, a*, and b* values for injection molded samples under different molding conditions, and calculated using Equation 1

$$\Delta E = [(\Delta L^*)^2 + (\Delta a^*)^2 + (\Delta b^*)^2]^{1/2} \qquad \text{(Equation 1)}$$

The reported color change (ΔE) under each abusive molding condition is determined from the difference in color space dimensions, ΔL*, Δa*, and Δb*, of an injection molded sample under the standard molding condition and an injection molded sample under the abusive molding condition.

The compositions of Examples 1 and 2 (E1 and E2) and Comparative Examples 1 to 7 (C1 to C7) are provided in Table 4. The compositions of Examples 3 and 4 (E3 and E4) and Comparative Examples 8 to 13 (C8 to C13) are provided in Table 5. The properties of Examples 1 and 2 (E1 and E2) and Comparative Examples 1 to 7 (C1 to C7) are provided in Table 6. All amounts are in weight percent (wt%) of the total composition.

Table 4

| Component | Unit | C1 | C2 | C3 | C4 | C5 | C6 | E1 | E2 | C7 |
|---|---|---|---|---|---|---|---|---|---|---|
| PCI | % | 57.661 | 57.511 | 57.3109 | 57.111 | 57.511 | 57.411 | 57.311 | 57.111 | 56.6109 |
| GF | % | 9.2 | 9.2 | 9.2 | 9.2 | 9.2 | 9.2 | 9.2 | 9.2 | 9.3 |
| PC2 | % | 31.6 | 31.6 | 31.6 | 31.6 | 31.6 | 31.6 | 31.6 | 31.6 | 30.98 |
| Rimar salt | % | 0.05 | 0.2 | - | - | - | - | 0.4 | 0.6 | 0.2 |
| KSS | % | - | - | 0.4 | 0.6 | - | - | - | - | - |
| NaTS | % | - | - | - | - | 0.2 | 0.3 | - | - | - |
| PETS | % | 0.24 | 0.24 | 0.24 | 0.24 | 0.24 | 0.24 | 0.24 | 0.24 | 0.27 |
| TSAN | % | 0.14 | 0.14 | 0.14 | 0.14 | 0.14 | 0.14 | 0.14 | 0.14 | 0.5 |
| $H_3PO_3$ | % | 0.14 | 0.14 | 0.14 | 0.14 | 0.14 | 0.14 | 0.14 | 0.14 | - |
| Phosphite | % | 0.03 | 0.03 | 0.03 | 0.03 | 0.03 | 0.03 | 0.03 | 0.03 | 0.05 |
| UV | % | - | - | - | - | - | - | - | - | 0.15 |
| BUTOS | % | - | - | - | - | - | - | - | - | 1 |
| $TiO_2$ | % | 0.44 | 0.44 | 0.44 | 0.44 | 0.44 | 0.44 | 0.44 | 0.44 | 0.44 |
| Black 7 | % | 0.00007 | 0.00007 | 0.00007 | 0.00007 | 0.00007 | 0.00007 | 0.00007 | 0.00007 | 0.00007 |
| Yellow 163 | % | 0.445 | 0.445 | 0.445 | 0.445 | 0.445 | 0.445 | 0.445 | 0.445 | 0.445 |
| Red 242 | % | 0.0057 | 0.0057 | 0.0057 | 0.0057 | 0.0057 | 0.0057 | 0.0057 | 0.0057 | 0.0057 |
| Red 135 | % | 0.0483 | 0.0483 | 0.0483 | 0.0483 | 0.0483 | 0.0483 | 0.0483 | 0.0483 | 0.0483 |

Table 5

| Component | Unit | C8 | C9 | C10 | C11 | C12 | C13 | E3 | E4 |
|---|---|---|---|---|---|---|---|---|---|
| PCI | % | 57.45 | 57.3 | 57.1 | 56.9 | 57.3 | 57.2 | 57.1 | 56.9 |
| GF | % | 9.2 | 9.2 | 9.2 | 9.2 | 9.2 | 9.2 | 9.2 | 9.2 |
| PC2 | % | 31.6 | 31.6 | 31.6 | 31.6 | 31.6 | 31.6 | 31.6 | 31.6 |
| Rimar salt | % | 0.05 | 0.2 | - | - | - | - | 0.4 | 0.6 |
| KSS | % | - | - | 0.4 | 0.6 | - | - | - | - |
| NaTS | % | - | - | - | - | 0.2 | 0.3 | - | - |
| PETS | % | 0.24 | 0.24 | 0.24 | 0.24 | 0.24 | 0.24 | 0.24 | 0.24 |
| TSAN | % | 0.14 | 0.14 | 0.14 | 0.14 | 0.14 | 0.14 | 0.14 | 0.14 |
| $H_3PO_3$ | % | 0.14 | 0.14 | 0.14 | 0.14 | 0.14 | 0.14 | 0.14 | 0.14 |
| Phosphite | % | 0.03 | 0.03 | 0.03 | 0.03 | 0.03 | 0.03 | 0.03 | 0.03 |

(continued)

| Component | Unit | C8 | C9 | C10 | C11 | C12 | C13 | E3 | E4 |
|---|---|---|---|---|---|---|---|---|---|
| $TiO_2$ | % | 1.113 | 1.113 | 1.113 | 1.113 | 1.113 | 1.113 | 1.113 | 1.113 |
| Black 7 | % | 0.0018 | 0.0018 | 0.00178 | 0.00178 | 0.00178 | 0.00178 | 0.00178 | 0.00178 |
| Red 101 | % | 0.031 | 0.031 | 0.031 | 0.031 | 0.031 | 0.031 | 0.031 | 0.031 |
| Violet 36 | % | 0.0015 | 0.0015 | 0.001473 | 0.001473 | 0.001473 | 0.001473 | 0.001473 | 0.001473 |
| Blue 104 | % | 0.0023 | 0.0023 | 0.002283 | 0.002283 | 0.002283 | 0.002283 | 0.002283 | 0.002283 |

Table 6

| | Unit | C1 | C2 | C3 | C4 | C5 | C6 | E1 | E2 | C7 |
|---|---|---|---|---|---|---|---|---|---|---|
| Rimar salt | wt% | 0.05 | 0.2 | - | - | - | - | 0.4 | 0.6 | 0.2 |
| ΔE (Abusive Molding 1) | - | 1.2 | 1.3 | 1.9 | 2.2 | 1.2 | 1.7 | 1.4 | 1.3 | 5.4 |
| ΔE (Abusive Molding 2) | - | 3.3 | 3.2 | 3.9 | 4.4 | 3.8 | 4.2 | 3.1 | 2.9 | 6.7 |
| ΔE (Abusive Molding 3) | - | 5.4 | 4.4 | 4.9 | 5.9 | 4.8 | 6.1 | 3.8 | 3.8 | 8.9 |
| MVR (300°C, 1.2 kg, 300 sec) | $cm^3$/10 min | 10.0 | 9.9 | 8.9 | 8.6 | 8.5 | 8.4 | 9.2 | 9.1 | 10.0 |

The properties of Examples 3 and 4 (E3 and E4) and Comparative Examples 8 to 13 (C8 to C13) are provided in Table 7.

Table 7

| | Unit | C8 | C9 | C10 | C11 | C12 | C13 | E3 | E4 |
|---|---|---|---|---|---|---|---|---|---|
| Rimar salt | wt% | 0.05 | 0.2 | - | - | - | - | 0.4 | 0.6 |
| ΔE (Abusive Molding 1) | - | 2.3 | 2.2 | 1.4 | 1.8 | 1.4 | 1.8 | 2.1 | 2.0 |
| ΔE (Abusive Molding 2) | - | 2.9 | 2.8 | 2.9 | 3.0 | 2.9 | 3 | 2.6 | 2.3 |
| ΔE (Abusive Molding 3) | - | 3.0 | 3.0 | 3.1 | 3.5 | 3.0 | 3.6 | 2.9 | 3.0 |
| MVR (300°C, 1.2 kg, 300 sec) | $cm^3$/10 min | 9.0 | 9.2 | 8.6 | 8.9 | 8.5 | 8.6 | 9.0 | 8.9 |

Tables 6 and 7 show the effect of Rimar salt loadings on color stability, where better color stability is defined as lower values of ΔE. The compositions that include Rimar salt loadings of 0.4 wt% (E1 and E3) and 0.6 wt% (E2 and E4) have better color stability under the three abusive molding conditions compared to compositions having Rimar salt loadings of 0.05 wt% (C1 and C8) or 0.2 wt% (C2 and C9). For Rimar salt loadings below 0.4 wt%, color stability was not significantly improved by using a color package having a greater amount of coated titanium dioxide (C8 and C9), which shows that Rimar salt loading provides the observed color stability (E3 and E4). The compositions that include Rimar salt loadings (E1 to E4) have better color stability under the three abusive molding conditions compared to compositions having either KSS or NaTS (C3 to C6 and C10 to C13), demonstrating the unique effect of Rimar salt to improve color stability. Comparative Example 7 shows that using butyl tosylate (BUTOS) instead of phosphorous acid did not result in better color stability at a Rimar salt loading of 0.2 wt%. The Rimar salt loadings did not significantly affect the melt volume flow rates for the compositions.

The present invention further encompasses the following additional preferred embodiments.

Embodiment 1: A thermoplastic composition, comprising:

88 to 92 wt%, preferably 89 to 91 wt% of a polycarbonate, a polycarbonate copolymer, or ae combination thereof, based upon a total weight of the composition;
5 to 20 weight percent, preferably 5 to 15 weight percent, more preferably 8 to 12 weight percent of a fiber reinforcement;
optionally 1 to 20 ppm, preferably 1 to 10 ppm, more preferably 3 to 5 ppm of a phosphorous-containing acid stabilizer;
0.01 to 2 weight percent, preferably 0.02 to 1 weight percent, more preferably 0.03 to 0.5 weight percent of a first

colorant comprising a dye, pigment, or a combination thereof, wherein the first colorant does not comprise titanium dioxide;

0.05 to 0.5 weight percent, preferably 0.1 to 0.4 weight percent, more preferably 0.1 to 0.3 weight percent of an anti-drip agent comprising polytetrafluoroethylene, polytetrafluoroethylene encapsulated in styrene acrylonitrile copolymer, polyphenylene ether, or a combination thereof; and

0.3 to 0.9 weight percent, preferably 0.4 to 0.8 weight percent, more preferably 0.4 to 0.6 weight percent of potassium perfluorobutane sulfonate,

wherein the composition does not comprise talc,

wherein all weight percent values are based on the total weight of the composition, and wherein the total weight percent is 100 wt%, and

wherein an injection molded sample of the composition subjected to molding conditions comprising a residence time of 600 seconds at 340°C has a ΔE value of less than or equal to 3.5, preferably less than or equal to 3, more preferably less than or equal to 2.8, according to the CIE1976 L*a*b* color measurement system as specified by ISO 11664-4:2008(E)/CIE S 014-4/E:2007, as measured at a thickness of 2.5 mm according to ASTM D2244 (2011).

First additional preferred embodiment: The composition of the first embodiment, comprising 8 to 12 wt% of a plurality of glass fibers, based upon a total weight of the composition.

Second additional preferred embodiment: The composition of any one or more of the preceding embodiments, comprising 3 to 5 ppm of phosphorous acid.

Third additional preferred embodiment: The composition of any one or more of the preceding embodiments , comprising 75 to 91 wt% or 80 to 91 wt% of the polycarbonate, the polycarbonate copolymer, or the combination thereof; 8 to 12 wt% of a plurality of glass fibers; 1 to 10 ppm of phosphorous acid; 0.02 to 1 wt% of the first colorant; 0.05 to 0.5 wt% of the anti-drip agent; and 0.4 to 0.8 wt% of the potassium perfluorobutane sulfonate, based upon a total weight of the composition, wherein an injection molded sample of the composition, subject to abusive molding conditions with a residence time of 900 seconds at 340°C, has a ΔE value of less than or equal to 5, preferably less than or equal to 4.5, more preferably less than or equal to 4.

Fourth additional preferred embodiment: The composition of any one or more of the preceding embodiments, comprising 75 to 91 wt% or 80 to 91 wt% of the polycarbonate, the polycarbonate copolymer, or the combination thereof; 8 to 12 wt% of a plurality of glass fibers; 1 to 10 ppm of phosphorous acid; 0.02 to 1 wt% of the first colorant; 0.05 to 0.5 wt% of an anti-drip agent; 0.4 to 0.8 wt% of potassium perfluorobutane sulfonate; and 0.01 to 20 wt%, or 0.01 to 6 wt%, or 0.01 to 2 wt% of titanium dioxide, based upon a total weight of the composition, wherein an injection molded sample of the composition, subject to abusive molding conditions with a residence time of 900 seconds at 340°C, has a ΔE value of less than or equal to 5, preferably less than or equal to 4.5, more preferably less than or equal to 4.

Fifth additional preferred embodiment: The composition of any one or more of the preceding embodiments, comprising 80 to 91 wt% of the polycarbonate, the polycarbonate copolymer, or the combination thereof; 8 to 12 wt% of a plurality of glass fibers; 1 to 10 ppm of phosphorous acid; 0.03 to 0.5 wt% of the first colorant; 0.05 to 0.5 wt% of an anti-drip agent; 0.4 to 0.6 wt% of the potassium perfluorobutane sulfonate; and 0.01 to 6 wt% of titanium dioxide, based upon a total weight of the composition, wherein an injection molded sample of the composition, subject to abusive molding conditions with a residence time of 900 seconds at 340°C, has a ΔE value of less than or equal to 4.

Sixth additional preferred embodiment: The composition of any one or more of the preceding embodiments, comprising 80 to 91 wt% of the polycarbonate, the polycarbonate copolymer, or the combination thereof; 8 to 12 wt% of a plurality of glass fibers; 1 to 10 ppm of phosphorous acid; 0.03 to 0.5 wt% of the first colorant; 0.05 to 0.5 wt% of an anti-drip agent; 0.4 to 0.6 wt% of the potassium perfluorobutane sulfonate; and 0.01 to 2 wt% of titanium dioxide, based upon a total weight of the composition, wherein an injection molded sample of the composition, subject to abusive molding conditions with a residence time of 900 seconds at 340°C, has a ΔE value of less than or equal to 3.5.

Seventh additional preferred embodiment: The composition of any one or more of the preceding embodiments, comprising 75 to 91 wt% or 80 to 91 wt% of one or more homopolycarbonates; 8 to 12 wt% of a plurality of glass fibers; 1 to 10 ppm of phosphorous acid; 0.05 to 0.5 wt% of the anti-drip agent; 0.01 to 2 wt% of the first colorant; 0.4 to 0.8 wt% or 0.4 to 0.6 wt% of the potassium perfluorobutane sulfonate; and 0.01 to 6 wt%, or 0.01 to 2 wt% of titanium dioxide, based upon a total weight of the composition, wherein an injection molded sample of the composition, subject to abusive molding conditions with a residence time of 900 seconds at 340°C, has a ΔE value of less than or equal to 5, preferably less than or equal to 4.5, more preferably less than or equal to 4.

Eighth additional preferred embodiment: The composition of any one or more of the preceding embodiments , comprising 75 to 91 wt% or 80 to 91 wt% of one or more polycarbonate copolymers; 8 to 12 wt% of a plurality of glass fibers; 1 to 10 ppm of phosphorous acid; 0.05 to 0.5 wt% of the anti-drip agent; 0.01 to 2 wt% of the first colorant; 0.4 to 0.8 wt% or 0.4 to 0.6 wt% of potassium perfluorobutane sulfonate; and 0.01 to 6 wt% or 0.01 to 2 wt% of titanium dioxide, based upon a total weight of the composition, wherein an injection molded sample of the composition, subject to abusive molding conditions with a residence time of 900 seconds at 340°C, has a ΔE value of less than or equal to

5, preferably less than or equal to 4.5, more preferably less than or equal to 4.

Embodiment 2: The use of the composition of any one or more of the preceding embodiments as a film, a sheet, a layer of a multilayer film, or a layer of a multilayer sheet.

The compositions can alternatively comprise, consist of, or consist essentially of, any appropriate materials, steps, or components herein disclosed. The compositions can additionally, or alternatively, be formulated so as to be devoid, or substantially free, of any materials (or species), steps, or components, that are otherwise not necessary to the achievement of the function or objectives of the compositions.

All ranges disclosed herein are inclusive of the endpoints, and the endpoints are independently combinable with each other. "Combinations" is inclusive of blends, mixtures, alloys, reaction products, and the like. "Combination thereof' is open, and includes combinations to the named items, as well as like items not named. "Or" means "and/or" unless clearly stated otherwise. The terms "a" and "an" and "the" do not denote a limitation of quantity, and are to be construed to cover both the singular and the plural, unless otherwise indicated herein or clearly contradicted by context.

Unless specified to the contrary herein, all test standards are the most recent standard in effect as of the filing date of this application, or, if priority is claimed, the filing date of the earliest priority application in which the test standard appears.

Technical and scientific terms used herein have the same meaning as is commonly understood by one of skill in the art to which this application belongs.

Compounds are described using standard nomenclature. "Alkyl" means a branched or straight chain, unsaturated hydrocarbon group. "Alkenyl" means a straight or branched chain, monovalent hydrocarbon group having at least one carbon-carbon double bond (e.g., ethenyl ($-HC=CH_2$)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene ($-CH_2-$) or, propylene ($-(CH_2)_3-$)). "Cycloalkylene" means a divalent cyclic alkylene group, $-C_nH_{2n-x}$, wherein x is the number of hydrogens replaced by cyclization(s). "Cycloalkenyl" means a monovalent mono- or multicyclic group having one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P.

Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro ($-NO_2$), cyano (-CN), hydroxy (-OH), halogen, thiol (-SH), thiocyano (-SCN), $C_{1-6}$ alkyl, $C_{2-6}$ alkenyl, $C_{2-6}$ alkynyl, $C_{1-6}$ haloalkyl, $C_{1-9}$ alkoxy, $C_{1-6}$ haloalkoxy, $C_{3-12}$ cycloalkyl, $C_{5-18}$ cycloalkenyl, $C_{6-12}$ aryl, $C_{7-13}$ arylalkylene (e.g., benzyl), $C_{7-12}$ alkylarylene (e.g, toluyl), $C_{4-12}$ heterocycloalkyl, $C_{3-12}$ heteroaryl, $C_{1-6}$ alkyl sulfonyl ($-S(=O)_2$-alkyl), $C_{6-12}$ arylsulfonyl ($-S(=O)_2$-aryl), or tosyl ($CH_3C_6H_4SO_2-$), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the compound or group, including those of any substituents.

## Claims

**1.** A thermoplastic composition, comprising:

40 to 94 weight percent, preferably 60 to 92 weight percent, more preferably 75 to 91 weight percent of a polycarbonate, a polycarbonate copolymer, or a combination thereof;
5 to 20 weight percent, preferably 5 to 15 weight percent, more preferably 8 to 12 weight percent of a fiber reinforcement;
optionally 1 to 20 ppm, preferably 1 to 10 ppm, more preferably 3 to 5 ppm of a phosphorous-containing acid stabilizer;
0.01 to 2 weight percent, preferably 0.02 to 1 weight percent, more preferably 0.03 to 0.5 weight percent of a first colorant consisting of a dye, pigment, or a combination thereof, wherein the first colorant does not comprise titanium dioxide;

0.05 to 0.5 weight percent, preferably 0.1 to 0.4 weight percent, more preferably 0.1 to 0.3 weight percent of an anti-drip agent selected from polytetrafluoroethylene, polytetrafluoroethylene encapsulated in styrene acrylonitrile copolymer, polyphenylene ether, or a combination thereof; and
0.3 to 0.9 weight percent, preferably 0.4 to 0.8 weight percent, more preferably 0.4 to 0.6 weight percent of potassium perfluorobutane sulfonate,
wherein the composition does not comprise talc,
wherein all weight percent values are based on the total weight of the composition, and wherein the total weight percent is 100 wt%, and
wherein an injection molded sample of the composition subjected to molding conditions comprising a residence time of 600 seconds at 340°C has a ΔE value of less than or equal to 3.5, preferably less than or equal to 3, more preferably less than or equal to 2.8, according to the CIE1976 L*a*b* color measurement system as specified by ISO 11664-4:2008(E)/CIE S 014-4/E:2007, as measured at a thickness of 2.5 mm according to ASTM D2244 (2011).

**2.** The composition of claim 1, further comprising 0.01 to 20 weight percent, preferably 0.01 to 6 weight percent, more preferably 0.01 to 2 weight percent of a second colorant that is selected from chromium oxide, zinc sulfide, zinc oxide, titanium dioxide, or a combination thereof, based on the total weight of the composition;
preferably wherein the second colorant is titanium dioxide.

**3.** The composition of any one or more of the preceding claims, comprising 1 to 20 ppm by weight, preferably 1 to 10 ppm by weight, more preferably 3 to 5 ppm by weight of the phosphorous-containing acid stabilizer; preferably wherein the phosphorous-containing acid stabilizer is selected from phosphoric acid, phosphorous acid, hypophosphorous acid, hypophosphoric acid, phosphinic acid, phosphonic acid, metaphosphoric acid, hexainetaphosphoric acid, thiophosphoric acid, fluorophosphoric acid, difluorophosphoric acid, fluorophosphorous acid, difluorophosphorous acid, fluorohypophosphorous acid, fluorohypophosphoric acid, or a combination thereof; more preferably wherein the phosphorous-containing acid stabilizer is phosphorous acid.

**4.** The composition of any one or more of the preceding claims, wherein the composition further comprises an additional sulfonate salt that is selected from potassium perfluorooctane sulfonate, tetraethylammonium perfluorohexane sulfonate, potassium diphenylsulfone sulfonate, sodium toluenesulfonate, or a combination thereof.

**5.** The composition of any one or more of the preceding claims, wherein the fiber reinforcement is selected from glass fibers, carbon fibers, basalt fibers, or a combination thereof, preferably wherein the fiber reinforcement is a plurality of glass fibers.

**6.** The composition of any one or more of the preceding claims, wherein the fiber reinforcement further comprises a bonding coating agent or a non-bonding coating agent, wherein the bonding coating agent is selected from epoxide, poly(vinyl acetate), polyester, starch, poly(acrylic acid), melamine, poly(vinyl chloride), poly($C_{1-3}$ alkylene oxide), polyurethane, polyepoxide, poly(vinyl alcohol), a $C_{1-6}$ organosilane, or a combination thereof and wherein the non-bonding coating agent comprises a polyolefin coating agent; preferably wherein the non-bonding coating agent is selected from polyethylene wax, polypropylene wax, polybutylene wax, polyethylene-propylene wax, polyethylene-butylene wax, or a combination thereof; preferably wherein the bonding coating agent or the non-bonding coating agent further comprises a silane coupling agent, preferably wherein the silane coupling agent is selected from tri($C_{1-6}$ alkoxy)monoamino silane, tri($C_{1-6}$ alkoxy)diamino silane, tri($C_{1-6}$ alkoxy)($C_{1-6}$ alkyl ureido) silane, tri($C_{1-6}$ alkoxy)(epoxy $C_{1-6}$ alkyl) silane, tri($C_{1-6}$ alkoxy)(glycidoxy $C_{1-6}$ alkyl) silane, tri($C_{1-6}$ alkoxy)(mercapto $C_{1-6}$ alkyl) silane, or a combination thereof.

**7.** The composition of any one or more of the preceding claims, further comprising a polycarbonate-polysiloxane copolymer in an amount such that the composition contains from 0.5 to 5 weight percent of siloxane, based upon a total weight of the composition.

**8.** The composition of any one or more of the preceding claims, wherein an injection molded sample of the composition subjected to molding conditions comprising a residence time of 900 seconds at 340°C, has a ΔE value of less than or equal to 5, preferably less than or equal to 4.5, more preferably less than or equal to 4, according to the CIE1976 L*a*b* color measurement system as specified by ISO 11664-4:2008(E)/CIE S 014-4/E:2007, as measured at a thickness of 2.5 mm according to ASTM D2244 (2011).

**9.** The composition of any one or more of the preceding claims, wherein the ΔE value of the injection molded sample

of the composition is at least 20% less than, preferably at least 30% less than, more preferably at least 40% less than a ΔE value of an injection molded sample of a comparable composition that does not comprise the amount of potassium perfluorobutane sulfonate as in the composition of claim 1, wherein the injection molded samples are subjected to the molding conditions comprising a residence time of 900 seconds at 340°C.

**10.** The composition of any one or more of the preceding claims, wherein the polycarbonate comprises a bisphenol A polycarbonate homopolymer comprising repeating units derived from bisphenol A; preferably wherein the polycarbonate has a $M_w$ of 18,000 to 40,000 grams per mole, as measured by gel permeation chromatography using bisphenol A polycarbonate standards.

**11.** The composition of any one or more of the preceding claims, wherein the polycarbonate comprises a high molecular weight polycarbonate having a $M_w$ greater than 25,000 grams per mole, and a low molecular weight polycarbonate having a $M_w$ less than 25,000 grams per mole, as measured by gel permeation chromatography using polycarbonate standards.

**12.** The composition of any one or more of the preceding claims, wherein the composition has a melt volume flow rate of 5 to 15 $cm^3$/10 min, preferably 8 to 12 $cm^3$/10 min, as measured according to ISO 1133 (2011) at 300°C with a 1.2 kg load for 5 minutes.

**13.** The use of the thermoplastic composition of any one or more of the preceding claims as a film, a sheet, a layer of a multilayer film, or a layer of a multilayer sheet.

## Patentansprüche

**1.** Eine thermoplastische Zusammensetzung, die Folgendes umfasst:

40 bis 94 Gewichtsprozent, vorzugsweise 60 bis 92 Gewichtsprozent, stärker bevorzugt 75 bis 91 Gewichtsprozent, eines Polycarbonats, eines Polycarbonatcopolymers oder einer Kombination davon;
5 bis 20 Gewichtsprozent, vorzugsweise 5 bis 15 Gewichtsprozent, stärker bevorzugt 8 bis 12 Gewichtsprozent, einer Faserverstärkung;
wahlweise 1 bis 20 ppm, vorzugsweise 1 bis 10 ppm, stärker bevorzugt 3 bis 5 ppm, eines Phosphor enthaltenden Säurestabilisators;
0,01 bis 2 Gewichtsprozent, vorzugsweise 0,02 bis 1 Gewichtsprozent, stärker bevorzugt 0,03 bis 0,5 Gewichtsprozent, eines ersten Färbemittels, bestehend aus einem Farbstoff, einem Pigment oder einer Kombination davon; wobei das erste Färbemittel nicht Titandioxid umfasst;
0,05 bis 0,5 Gewichtsprozent, vorzugsweise 0,1 bis 0,4 Gewichtsprozent, stärker bevorzugt 0,1 bis 0,3 Gewichtsprozent, eines Antitropfmittels, gewählt aus Polytetrafluorethylen, Polytetrafluorethylen, eingekapselt in Styrolacrylnitrilcopolymer, Polyphenylenether oder einer Kombination davon; und
0,3 bis 0,9 Gewichtsprozent, vorzugsweise 0,4 bis 0,8 Gewichtsprozent, stärker bevorzugt 0,4 bis 0,6 Gewichtsprozent, Kaliumperfluorbutansulfonat;
wobei die Zusammensetzung keinen Talk umfasst;
wobei alle Gewichtsprozentsätze auf dem Gesamtgewicht der Zusammensetzung basieren und wobei der Gesamtgewicht-Prozentsatz 100 Gewichtsprozent beträgt; und
wobei eine spritzgegossene Probe der Zusammensetzung, die Formbedingungen ausgesetzt wird, welche eine Verweildauer von 600 Sekunden bei 340°C umfassen, einen ΔE-Wert von höchstens 3,5, vorzugsweise höchstens 3, stärker bevorzugt höchstens 2,8, entsprechend dem CIE1976 L*a*b*-Farbmesssystem hat, wie spezifiziert durch ISO 11664-4:2008(E)/CIE S 014-4/E:2007, gemessen bei einer Dicke von 2,5 mm gemäß ASTM D2244 (2011).

**2.** Die Zusammensetzung gemäß Anspruch 1, die weiter 0,01 bis 20 Gewichtsprozent, vorzugsweise 0,01 bis 6 Gewichtsprozent, stärker bevorzugt 0,01 bis 2 Gewichtsprozent, eines zweiten Färbemittels umfasst, das gewählt ist aus Chromoxid, Zinksulfid, Zinkoxid, Titandioxid oder einer Kombination davon, basierend auf dem Gesamtgewicht der Zusammensetzung;
wobei das zweite Färbemittel vorzugsweise Titandioxid ist.

**3.** Die Zusammensetzung gemäß einem beliebigen oder mehreren der obigen Ansprüche, die 1 bis 20 Gewichts-ppm, vorzugsweise 1 bis 10 Gewichts-ppm, stärker bevorzugt 3 bis 5 Gewichts-ppm, des Phosphor enthaltenden Säurestabilisators umfasst, wobei der Phosphor enthaltende Säurestabilisator vorzugsweise gewählt ist aus Phosphorsäure, phosphoriger Säure, unterphosphoriger Säure, Hypophosphorsäure, Phosphinsäure, Phosphonsäure, Metaphosphorsäure, Hexainetaphosphorsäure, Thiophosphorsäure, Fluorphosphorsäure, Difluorphosphorsäure, fluorphosphoriger Säure, difluorphosphoriger Säure, fluorunterphosphoriger Säure, Fluorhypophosphorsäure oder einer Kombination davon; wobei der Phosphor enthaltende Säurestabilisator vorzugsweise phosphorige Säure ist.

4. Die Zusammensetzung gemäß einem oder mehreren der obigen Ansprüche, wobei die Zusammensetzung weiter ein zusätzliches Sulfonatsalz umfasst, das gewählt ist aus Kaliumperfluoroctansulfonat, Tetraethylammoniumperfluorhexansulfonat, Kaliumdiphenylsulfonsulfonat, Natriumtoluensulfonat oder einer Kombination davon.

5. Die Zusammensetzung gemäß einem oder mehreren der obigen Ansprüche, wobei die Faserverstärkung gewählt ist aus Glasfasern, Carbonfasern, Basaltfasern oder einer Kombination davon, wobei die Faserverstärkung vorzugsweise eine Vielzahl von Glasfasern ist.

6. Die Zusammensetzung gemäß einem oder mehreren der obigen Ansprüche, wobei die Faserverstärkung weiter ein haftendes Beschichtungsmittel oder ein nicht haftendes Beschichtungsmittel umfasst, wobei das haftende Beschichtungsmittel gewählt ist aus Epoxid, Poly(vinylacetat), Polyester, Stärke, Poly(acrylsäure), Melamin, Poly(vinylchlorid), Poly($C_{1-3}$-alkylenoxid), Polyurethan, Polyepoxid, Poly(vinylalkohol), einem $C_{1-6}$-Organosilan oder einer Kombination davon; und wobei das nicht haftende Beschichtungsmittel ein Polyolefin-Beschichtungsmittel umfasst; wobei das nicht haftende Beschichtungsmittel vorzugsweise gewählt ist aus Polyethylenwachs, Polypropylenwachs, Polybutylenwachs, Polyethylen-Propylenwachs, Polyethylen-Butylenwachs oder einer Kombination davon; wobei das haftende Beschichtungsmittel oder das nicht haftende Beschichtungsmittel weiter ein Silan-Kopplungsmittel umfasst, wobei das Silan-Kopplungsmittel vorzugsweise gewählt ist aus Tri ($C_{1-6}$-alkoxy) monoaminosilan, Tri ($C_{1-6}$-alkoxy) diaminosilan, Tri ($C_{1-6}$-alkoxy) ($C_{1-6}$-alkylureido) silan, Tri ($C_{1-6}$-alkoxy) (epoxy-$C_{1-6}$-alkyl) silan, Tri ($C_{1-6}$-alkoxy) (glycidoxy-$C_{1-6}$-alkyl) silan, Tri ($C_{1-6}$-alkoxy)(mercapto-$C_{1-6}$-alkyl)silan oder einer Kombination davon.

7. Die Zusammensetzung gemäß einem oder mehreren der obigen Ansprüche, die weiter ein Polycarbonat-Polysiloxan-Compolymer in einer solchen Menge umfasst, dass die Zusammensetzung 0,5 bis 5 Gewichtsprozent Siloxan, basierend auf einem Gesamtgewicht der Zusammensetzung, enthält.

8. Die Zusammensetzung gemäß einem oder mehreren der obigen Ansprüche, wobei eine spritzgegossene Probe der Zusammensetzung, die Formbedingungen ausgesetzt wird, welche eine Verweildauer von 900 Sekunden bei 340°C umfassen, einen ΔE-Wert von höchstens 5, vorzugsweise höchstens 4,5, stärker bevorzugt höchstens 4, entsprechend dem CIE1976 L*a*b*-Farbmesssystem hat, wie spezifiziert durch ISO 11664-4:2008(E)/CIE S 014-4/E:2007, gemessen bei einer Dicke von 2,5 mm gemäß ASTM D2244 (2011).

9. Die Zusammensetzung gemäß einem oder mehreren der obigen Ansprüche, wobei der ΔE-Wert der spritzgegossenen Probe der Zusammensetzung mindestens 20% kleiner, vorzugsweise mindestens 30% kleiner, stärker bevorzugt mindestens 40% kleiner ist als ein ΔE-Wert einer spritzgegossenen Probe einer vergleichbaren Zusammensetzung, die nicht die Menge an Kaliumperfluorbutansulfonat umfasst wie in der Zusammensetzung gemäß Anspruch 1, wobei die spritzgegossenen Proben den Formbedingungen ausgesetzt werden, die eine Verweildauer von 900 Sekunden bei 340°C umfassen.

10. Die Zusammensetzung gemäß einem oder mehreren der obigen Ansprüche, wobei das Polycarbonat ein Bisphenol A-Polycarbonat-Homopolymer umfasst, das von Bisphenol A abgeleitete Wiederholungseinheiten umfasst; wobei das Polycarbonat vorzugsweise ein $M_w$ von 18.000 bis 40.000 Gramm pro mol hat, gemessen durch Gelpermeationschromatographie unter Anwendung von Bisphenol A-Polycarbonatstandards.

11. Die Zusammensetzung gemäß einem oder mehreren der obigen Ansprüche, wobei das Polycarbonat ein hochmolekulargewichtiges Polycarbonat mit einem Mw von mehr als 25.000 Gramm pro mol und ein niedermolekulargewichtiges Polycarbonat mit einem $M_w$ von weniger als 25.000 Gramm pro mol umfasst, gemessen durch Gelpermeationschromatographie unter Anwendung von Polycarbonatstandards.

12. Die Zusammensetzung gemäß einem oder mehreren der obigen Ansprüche, die eine Schmelzvolumenfließrate von 5 bis 15cm$^3$/10 min, vorzugsweise 8 bis 12 cm$^3$/10 min, hat, gemessen nach ISO 1133 (2011) über 5 Minuten bei 300°C unter einer Last von 1,2 kg.

13. Die Verwendung der thermoplastischen Zusammensetzung gemäß einem oder mehreren der obigen Ansprüche

als Folie, Schicht, Lage einer mehrlagigen Folie oder Lage einer mehrlagigen Schicht.

**Revendications**

**1.** Composition thermoplastique comprenant :

40 à 94 % en poids, de préférence 60 à 92 % en poids, mieux encore 75 à 91 % en poids d'un polycarbonate, d'un copolymère de polycarbonate, ou d'une combinaison de ceux-ci ;
5 à 20 % en poids, de préférence 5 à 15 % en poids, mieux encore 8 à 12 % en poids d'un renforcement fibreux ;
éventuellement 1 à 20 ppm, de préférence 1 à 10 ppm, mieux encore 3 à 5 ppm d'un stabilisant acide contenant du phosphore ;
0,01 à 2 % en poids, de préférence 0,02 à 1 % en poids, mieux encore 0,03 à 0,5 % en poids d'un premier agent colorant consistant en un colorant, un pigment, ou une combinaison de ceux-ci, lequel premier agent colorant ne comprend pas de dioxyde de titane ;
0,05 à 0,5 % en poids, de préférence 0,1 à 0,4 % en poids, mieux encore 0,1 à 0,3 % en poids d'un agent anti-goutte choisi parmi le polytétrafluoroéthylène, le polytétrafluoroéthylène encapsulé dans un copolymère de styrène-acrylonitrile, le polyphénylène-éther, ou une combinaison de ceux-ci ; et
0,3 à 0,9 % en poids, de préférence 0,4 à 0,8 % en poids, mieux encore 0,4 à 0,6 % en poids de perfluorobutanesulfonate de potassium,
laquelle composition ne comprend pas de talc,
dans laquelle toutes les valeurs de pourcentage en poids sont basées sur le poids total de la composition, et dans laquelle le pourcentage en poids total est de 100 % en poids, et
dans laquelle un échantillon moulé par injection de la composition soumise à des conditions de moulage comprenant un temps de séjour de 600 secondes à 340°C a une valeur ΔE inférieure ou égale à 3,5, de préférence inférieure ou égale à 3, mieux encore inférieure ou égale à 2,8, conformément au système de colorimétrie CIE1976 L*a*b* tel que spécifié par la norme ISO 11664-4:2008(E)/CIE S 014-4/E:2007, telle que mesurée sur une épaisseur de 2,5 mm conformément à la norme ASTM D2244 (2011).

**2.** Composition selon la revendication 1, comprenant en outre 0,01 à 20 % en poids, de préférence 0,01 à 6 % en poids, mieux encore 0,01 à 2 % en poids, par rapport au poids total de la composition, d'un deuxième agent colorant qui est choisi parmi l'oxyde de chrome, le sulfure de zinc, l'oxyde de zinc, le dioxyde de titane, ou une combinaison de ceux-ci ;
de préférence dans laquelle le deuxième agent colorant est le dioxyde de titane.

**3.** Composition selon l'une quelconque ou plusieurs des revendications précédentes, comprenant 1 à 20 ppm en poids, de préférence 1 à 10 ppm en poids, mieux encore 3 à 5 ppm en poids du stabilisant acide contenant du phosphore ; de préférence dans laquelle le stabilisant acide contenant du phosphore est choisi parmi l'acide phosphorique, l'acide phosphoreux, l'acide hypophosphoreux, l'acide hypophosphorique, l'acide phosphinique, l'acide phosphonique, l'acide métaphosphorique, l'acide hexamétaphosphorique, l'acide thiophosphorique, l'acide fluorophosphorique, l'acide difluorophosphorique, l'acide fluorophosphoreux, l'acide difluorophosphoreux, l'acide fluorohypophosphoreux, l'acide fluorohypophosphorique, ou une combinaison de ceux-ci ; mieux encore dans laquelle le stabilisant acide contenant du phosphore est l'acide phosphoreux.

**4.** Composition selon l'une quelconque ou plusieurs des revendications précédentes, laquelle composition comprend en outre un sel sulfonate additionnel qui est choisi parmi le perfluorooctanesulfonate de potassium, le perfluorohexanesulfonate de tétraéthylammonium, le diphénylsulfonesulfonate de potassium, le toluènesulfonate de sodium, ou une combinaison de ceux-ci.

**5.** Composition selon l'une quelconque ou plusieurs des revendications précédentes, dans laquelle le renforcement fibreux est choisi parmi les fibres de verre, les fibres de carbone, les fibres de basalte, ou une combinaison de celles-ci, de préférence dans laquelle le renforcement fibreux est une pluralité de fibres de verre.

**6.** Composition selon l'une quelconque ou plusieurs des revendications précédentes, dans laquelle le renforcement fibreux comprend en outre un agent de revêtement liant ou un agent de revêtement non liant, dans laquelle l'agent de revêtement liant est choisi parmi un époxyde, un poly(acétate de vinyle), un polyester, l'amidon, un poly(acide acrylique), la mélamine, un poly(chlorure de vinyle), un poly(oxyde d'alkylène en $C_1$ à $C_3$), un polyuréthane, un

polyépoxyde, un poly(alcool vinylique), un organosilane en $C_1$ à $C_6$, ou une combinaison de ceux-ci, et dans laquelle l'agent de revêtement non liant comprend un agent de revêtement polyoléfinique ; de préférence dans laquelle l'agent de revêtement non liant est choisi parmi une cire de polyéthylène, une cire de polypropylène, une cire de polybutylène, une cire de polyéthylène-propylène, une cire de polyéthylène-butylène, ou une combinaison de celles-ci ; de préférence dans laquelle l'agent de revêtement liant ou l'agent de revêtement non liant comprend en outre un agent de couplage de type silane, de préférence dans laquelle l'agent de couplage de type silane est choisi parmi un tri(alcoxy en $C_1$ à $C_6$)monoaminosilane, un tri(alcoxy en $C_1$ à $C_6$)diaminosilane, un tri(alcoxy en $C_1$ à $C_6$)(alkyluréido en $C_1$ à $C_6$)silane, un tri(alcoxy en $C_1$ à $C_6$)(époxy-alkyle en $C_1$ à $C_6$)silane, un tri(alcoxy en $C_1$ à $C_6$)(glycidoxy-alkyle en $C_1$ à $C_6$)silane, un tri(alcoxy en $C_1$ à $C_6$)(mercapto-alkyle en $C_1$ à $C_6$)silane, ou une combinaison de ceux-ci.

**7.** Composition selon l'une quelconque ou plusieurs des revendications précédentes, comprenant en outre un copolymère de polycarbonate-polysiloxane en une quantité telle que la composition contienne 0,5 à 5 % en poids de siloxane, par rapport au poids total de la composition.

**8.** Composition selon l'une quelconque ou plusieurs des revendications précédentes, dans laquelle un échantillon moulé par injection de la composition soumise à des conditions de moulage comprenant un temps de séjour de 900 secondes à 340°C a une valeur ⍰E inférieure ou égale à 5, de préférence inférieure ou égale à 4,5, mieux encore inférieure ou égale à 4, conformément au système de colorimétrie CIE1976 L*a*b* tel que spécifié par la norme ISO 11664-4:2008(E)/ CIE 5 014-4/E:2007, telle que mesurée sur une épaisseur de 2,5 mm conformément à la norme ASTM D2244 (2011).

**9.** Composition selon l'une quelconque ou plusieurs des revendications précédentes, dans laquelle la valeur ⍰E de l'échantillon moulé par injection de la composition est inférieure d'au moins 20 %, de préférence inférieure d'au moins 30 %, mieux encore inférieure d'au moins 40 % à la valeur ⍰E d'un échantillon moulé par injection d'une composition comparable qui ne comprend pas la quantité de perfluorobutanesulfonate de potassium comme dans la composition de la revendication 1, dans laquelle les échantillons moulés par injection sont soumis aux conditions de moulage comprenant un temps de séjour de 900 secondes à 340°C.

**10.** Composition selon l'une quelconque ou plusieurs des revendications précédentes, dans laquelle le polycarbonate comprend un homopolymère de polycarbonate de bisphénol A comprenant des motifs répétitifs dérivés de bisphénol A; de préférence dans laquelle le polycarbonate a une $M_w$ de 18 000 à 40 000 grammes par mole, telle que mesurée par chromatographie par permeation de gel utilisant des étalons en polycarbonate de bisphénol A.

**11.** Composition selon l'une quelconque ou plusieurs des revendications précédentes, dans laquelle le polycarbonate comprend un polycarbonate de masse moléculaire élevée ayant une $M_w$ supérieure à 25 000 grammes par mole, et un polycarbonate de faible masse moléculaire ayant une $M_w$ inférieure à 25 000 grammes par mole, telles que mesurées par chromatographie par permeation de gel utilisant des étalons en polycarbonate.

**12.** Composition selon l'une quelconque ou plusieurs des revendications précédentes, laquelle composition a un débit volumique à l'état fondu de 5 à 15 $cm^3$/10 min, de préférence de 8 à 12 $cm^3$/10 min, tel que mesuré conformément à la norme ISO 1133 (2011) à 300°C avec une charge de 1,2 kg pendant 5 minutes.

**13.** Utilisation de la composition thermoplastique de l'une quelconque ou plusieurs des revendications précédentes sous la forme d'un film, d'une feuille, d'une couche d'un film multicouche, ou d'une couche d'une feuille multicouche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013076636 A
- US 7462662 B
- WO 2013175448 A1
- US 20140295363 A
- WO 2014072923 A
- EP 0524731 A1
- WO 2014072923 A1


### Non-patent literature cited in the description


- *CHEMICAL ABSTRACTS,* 31570-04-4
- *CHEMICAL ABSTRACTS,* 3147-75-9
- *CHEMICAL ABSTRACTS,* 778-28-9
- *CHEMICAL ABSTRACTS,* 1333-86-4
- *CHEMICAL ABSTRACTS,* 20749-68-2
- *CHEMICAL ABSTRACTS,* 522-75-8
- *CHEMICAL ABSTRACTS,* 116-75-6
- *CHEMICAL ABSTRACTS,* 61951-89-1
- *CHEMICAL ABSTRACTS,* 13676-91-0
- *CHEMICAL ABSTRACTS,* 1309-37-1